# FASCICULE DE BREVET EUROPEEN

(11) **EP 1 112 932 B1**
(45) Date de publication et mention de la délivrance du brevet: **17.03.2004**
(21) Numéro de dépôt: 00403660.4
(22) Date de dépôt: 22.12.2000
(51) Int. Cl.: B65B 9/04, G06K 19/077, B65B 15/04

(54) **Procédé de fabrication d'une étiquette électronique et carte plastique correspondante**
VERFAHREN ZUM HERSTELLEN EINES ELEKTRONISCHEN ETIKETTS SOWIE DIE KORRESPONDIERENDE CHIPKARTE
Method for manufacturing an electronic label as well as the corresponding plastic card

(30) Priorité: 31.12.1999 FR 9916824
(43) Date de publication de la demande: 04.07.2001
(73) Titulaire: Allibert Equipement, 92018 Nanterre (FR)
(72) Inventeur: Auzou, André, 27600 Saint-Aubin-Sur-Gaillon (FR); Li, Weidong, 78480 Verneuil-Sur-Seine (FR)
(74) Mandataire: Lerner, François

(56) Documents cités:
- EP-A- 0 132 183
- EP-A- 0 649 719
- EP-A- 0 669 597
- EP-A- 0 706 152
- DE-A- 4 040 770
- GB-A- 2 294 899
- US-A- 5 682 731

## Description

L'invention concerne un procédé pour conditionner une étiquette électronique comprenant une puce électronique.

Une application privilégiée d'une telle étiquette conditionnée concerne l'intégration de cette étiquette dans la paroi d'une pièce au moins en partie en matière plastique.

Une étiquette comprenant une puce électronique est connue.

La société GEMPLUS en commercialise ainsi sous la référence SMA 210 et LMA 210.

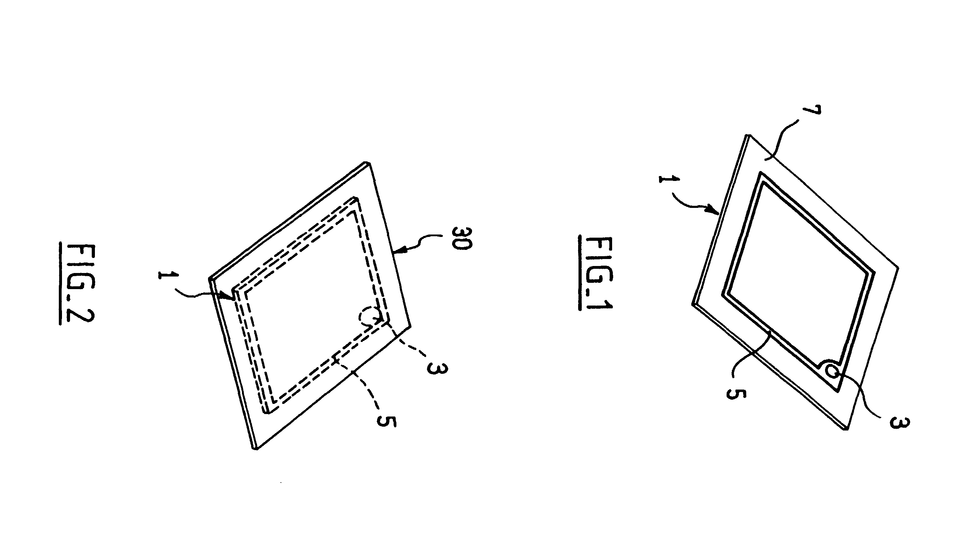

Comme illustré sur la figure 1, on appellera "étiquette" une structure plane et mince 1 comprenant un circuit intégré (ou puce) 3 relié à une antenne 5, le tout étant déposé sur un substrat ou film mince 7.

L'antenne peut se présenter comme un carré ou un rond, par exemple.

Le substrat 7 peut être en époxy et présenter une épaisseur d'environ 0,10 mm à 0,15 mm, avec une forme carrée, par exemple 30 mm x 30 mm.

L'épaisseur de l'antenne 5, qui peut être sérigraphiée, est typiquement comprise entre 0,04 mm et 0,08 mm.

L'épaisseur du circuit intégré 3 est quant à elle typiquement comprise entre 0,4 et 0,8 mm.

On pourra se reporter à WO-A-98 42488 pour plus de détail sur l'étiquette (voir description page 3, ligne 32 à page 5, ligne 3).

Un problème rencontré avec de telles étiquettes concerne leur conditionnement et leur condition d'inclusion dans la paroi de la pièce, sans recourir à un mode opératoire trop contraignant tout en s'assurant qu'à terme l'étiquette ne sera pas endommagée et sera suffisamment protégée des agressions extérieures en dépit des conditions d'utilisation parfois agressives vis-à-vis de la pièce plastique.

A cet égard, il avait en particulier été proposé dans WO-A-93 24381 de préconditionner chaque étiquette en l'incorporant à l'intérieur d'une sorte d'enveloppe protectrice.

Au contraire, dans WO-A-98 42488, la solution est de se dispenser d'une telle enveloppe (appelée alors boîtier) comme indiqué en page 3, ligne 33, page 4, ligne 3, de la demande telle que publiée, le "boîtier" étant présenté comme destiné en particulier à protéger l'étiquette des température et pression de moulage. WO-A-98 42488 prévoit par contre de fixer la face plane de l'étiquette (celle opposée à la face qui reçoit la puce 3) sur un support en matière plastique ayant avantageusement une épaisseur de l'ordre de 500 à 700 microns auquel le film 7 adhère donc.

Après avoir été ainsi préconditionnée, l'étiquette est placée dans un moule où l'on va apporter la matière de moulage de la pièce plastique.

Dans WO-A-93 24381, un moulage par injection est réalisé au cours duquel le boîtier renfermant l'étiquette est "encapsulé", en tout ou partie, par la paroi de la pièce formée et une fermeture définitive du boîtier est alors obtenue, le boîtier n'ayant à l'origine pas été parfaitement fermé.

Dans WO-98 42488, c'est la fusion de la matière plastique du support avec la matière plastique de la pièce elle-même qui assure l'inclusion et le maintien de l'étiquette.

Un procédé pour la fabrication de cartes à circuit intégré est connu par le document GB-A-2 294 899.

Face en particulier à un tel art antérieur, l'invention a pour objet :
- d'assurer un conditionnement optimisé de l'étiquette qui tienne compte des avantages mais aussi des inconvénients, en particulier de WO-A-93 24381 et WO-A-98 42488,
- d'optimiser cette opération de conditionnement, tant en termes de sécurité pour la puce (diminution des risques d'endommagement) que de coûts (coût des essais de fiabilité, du processus de collage jusqu'à présent souvent utilisé pour relier la puce à son support lors du conditionnement, notamment),
- d'assurer une résistance optimisée de l'étiquette aux conditions de pression et de température si l'étiquette doit être ultérieurement intégrée à une pièce plastique moulée,
- de réduire alors au maximum l'épaisseur d'inclusion de cette étiquette dans la paroi de ladite pièce plastique, tout en assurant une résistance mécanique et chimique appropriée de l'étiquette aux agressions extérieures.

Pour cela, l'invention prévoit :
- de placer l'étiquette entre deux feuilles dont l'une au moins est en matière thermoplastique et chaude au moins en partie,
- et d'exercer une force sur au moins la feuille chaude en matière thermoplastique, pour la déformer, en y créant ainsi un logement en creux pour l'étiquette, laquelle est ainsi étroitement emprisonnée entre lesdites feuilles.

A noter que la seconde feuille pourra être en tissu.

Dans ce cas, il est conseillé:
- d'utiliser comme feuilles, un film en matière thermoplastique et une feuille en tissu,
- et, lors de l'étape de placement de l'étiquette entre cette feuille et ce film :
   . de placer le film, ou de s'assurer qu'il est, alors à une température supérieure à sa température de transition vitreuse,
   . d'interposer l'étiquette entre la feuille de tissu et le film alors à cette température,
   . de forcer le film à se déformer jusqu'à y créer ledit logement en creux pour l'étiquette,
   . et de lier ensemble la feuille de tissu et le film, autour de l'étiquette.

Avantages : bonne cohésion entre les feuilles et rigidification de l'ensemble conditionné. On limite encore plus les problèmes de décollement, d'arrachement et d'endommagement de l'étiquette.

Si les deux feuilles sont des films en thermoplastique, alors on conseille plutôt :
- d'utiliser comme feuilles, un premier et un second films en matière thermoplastique,
- et, lors de l'étape de placement de l'étiquette entre ces films, de placer d'abord l'étiquette contre le premier film, puis d'amener le second film contre le premier en emprisonnant l'étiquette entre les deux films, l'un au moins d'entre eux étant alors à une température supérieure à sa température de transition vitreuse.

Pour déformer l'une au moins des feuilles, afin d'y créer ledit logement pour l'étiquette, tout en assurant une immobilisation efficace de cette étiquette entre les feuilles et en fixant ces dernières ensemble, deux possibilités sont particulièrement conseillées :
- le calandrage à chaud ; dans ce cas, on conseille d'exercer la force prévue sur les feuilles en les calandrant juste après avoir extrudé au moins l'une d'elles, ce qui les lie intimement ensemble autour de l'étiquette,
- ou le thermocollage : on exerce alors la force sur la(les) feuille(s) en les thermocollant ensemble, l'état caoutchoutique dans lequel se trouve la(les) feuille(s) à ce moment permettant à la fois la création de la zone en creux pour l'étiquette et la liaison intime des feuilles entre elles, autour de l'étiquette.

On notera que dans chaque cas, la force exercée sur l'étiquette (en particulier sur la puce) reste limitée, compte tenu de l'état caoutchoutique atteint pour obtenir une déformation sans contrainte excessive de la(des) feuille(s).

Si par ailleurs la matière du(des) film(s) thermoplastique(s) est une polyoléfine (polyéthylène, polypropylène notamment), alors il est conseillé que le(chaque) film "chaud" soit, au moment où il doit être déformé, à une température avoisinant la température de transition vitreuse de la matière, à plus ou moins 80°C environ, et de préférence, à plus ou moins 30°C.

Outre le procédé de conditionnement qui vient d'être présenté, l'invention se rapporte également à une pièce en matière plastique intégrant une étiquette obtenue par ce procédé, les matières plastique et thermoplastique, respectivement de la pièce et de l'étiquette, étant alors fusionnées ensemble.

Une description plus détaillée de l'invention va maintenant être fournie, en référence aux dessins annexés dans lesquels :
- la figure 1, dont on a déjà parlé, présente une étiquette électronique conforme à l'invention,
- la figure 2 présente l'étiquette conditionnée, en perspective,
- la figure 3 correspond à la coupe III - III de la figure 6 (étiquette conditionnée seule),
- les figures 4 et 5 représentent chacune une coupe partielle d'une étiquette conditionnée, la coupe étant faite perpendiculairement à celle de la figure 3,
- la figure 6 représente schématiquement le conditionnement avec scellement par calandrage de l'étiquette conditionnée de la figure 3,
- la figure 7 représente schématiquement le conditionnement avec scellement par calandrage de l'étiquette conditionnée de la figure 4,
- la figure 8 représente l'étiquette conditionnée de la figure 3 dans une unité de moulage d'une pièce plastique,
- et la figure 9 représente l'étiquette conditionnée de la figure 8 une fois la matière plastique amenée dans l'unité de moulage de la figure 8.

Sur la figure 2, tout d'abord, on a repéré en 30 l'emballage fermé à l'intérieur duquel est étroitement logée l'étiquette 1.

A travers la face visible sur la figure de la pellicule supérieure de l'emballage 30, on aperçoit la puce 3 et l'antenne 5.

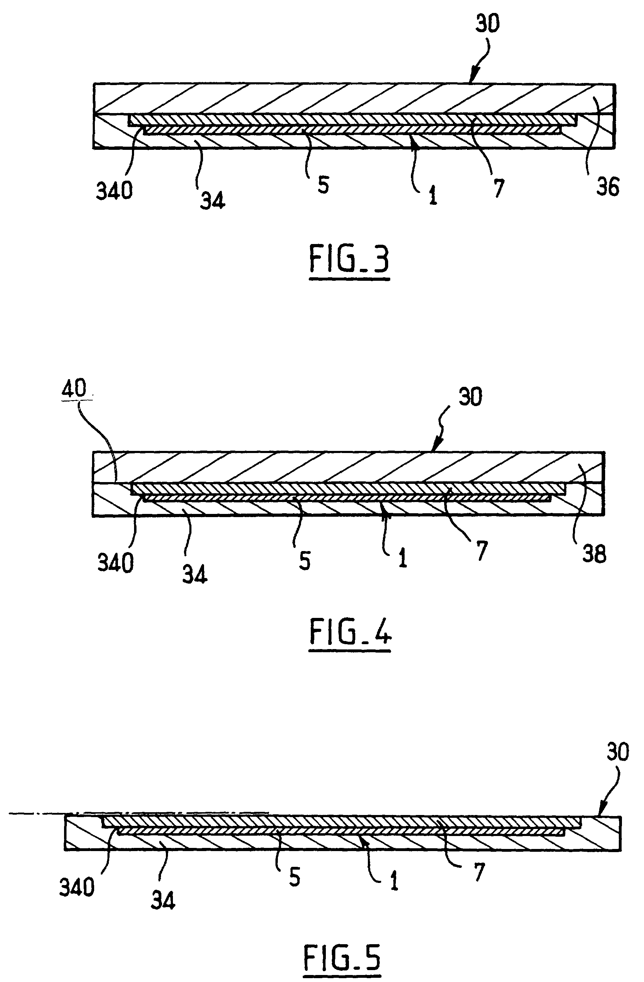

Selon les deux modes préférés de réalisation particulièrement retenus, cet ensemble 1, 30, peut se présenter schématiquement, en coupe, comme sur l'une des figures 3 à 5, en tant qu'''étiquette conditionnée".

On notera toutefois que ces figures 3 à 5 sont des représentations schématiques qui ne respectent pas particulièrement les échelles ni les proportions entre les éléments.

Sur la figure 3, on retrouve quoi qu'il en soit l'étiquette 1, avec son antenne 5 sur l'une des faces du substrat 7.

Autour de l'étiquette, a été scellée, sur toute sa périmétrie, l'enveloppe 30, laquelle l'encapsule entièrement et est en l'espèce constituée de deux films totalement (ou essentiellement) en matière thermoplastique, respectivement supérieur et inférieur, 34, 36.

Ces deux films peuvent être monocomposant et en particulier, monocouche et être par exemple en polypropylène ou polyéthylène.

On pourrait également prévoir que l'un au moins des films soit multicouche, un point important étant que les deux films 34, 36, puissent se lier ensemble intimement de manière à emprisonner entre eux l'étiquette, étroitement.

La liaison entre les films s'effectuera de préférence à chaud, par soudage (ou du moins collage) relatif.

Sur la figure 3, on remarquera que le film 34 a été écrasé à l'endroit de l'étiquette 1. Cette déformation a été obtenue par compression à chaud du film, avec pour conséquence qu'une zone en creux 340, en forme de cuvette, s'est formée à partir de la surface intérieure de ce film, à l'endroit de l'étiquette, laquelle est ainsi logée sur toute son épaisseur dans cette zone en creux.

Si seul un film a été chauffé (en l'espèce 34) pour devenir "caoutchoutique" (au-delà de sa température de transition vitreuse, voire dans les environs de sa température de fusion, comme indiqué ci-avant), alors il a été déformé de sorte que s'est créée la cavité 340 pour l'étiquette. Cette déformation a pu être obtenue par calandrage.

Dans la réalité cependant, il peut y avoir compression visible des deux films, en particulier s'ils ont été tous deux chauffés pour devenir malléables et caoutchoutiques, avec création de deux zones en creux, face à face, et donc logement de l'étiquette dans l'épaisseur d'origine (non comprimée) de l'un et l'autre des films.

L'épaisseur nominale de chacun des deux films peut être de quelques centaines de microns.

La nature thermoplastique des deux films et leur liaison intime l'un à l'autre permet d'assurer un conditionnement étanche à l'air et aux liquides (eau).

En particulier, si le procédé de fabrication de cette étiquette conditionnée consiste en un calandrage, sur lequel on va revenir ci-après, l'intérieur de la pochette 30 pourra être sensiblement sous vide d'air.

Sur la figure 4, on retrouve le film thermoplastique supérieur 34, mais le film inférieur a été remplacé par une fine feuille de tissu 38, c'est-à-dire constituée d'une matrice de fil(s) tissé(s), quelle que soit la nature des fils (naturelle ou synthétique).

Dans ce cas, le tissu peut n'avoir pas été déformé particulièrement par le processus de conditionnement.

Son épaisseur peut être de quelques centaines de microns à environ un millimètre.

Le film thermoplastique 34 (à l'opposé duquel sont toujours placées la puce et son antenne) a été comprimé comme sur la figure 3, puisque l'étiquette 1 est ici entièrement logée dans la cuvette en creux que forme ce seul film 34.

En périmétrie immédiate de l'étiquette (là où il n'a pas été comprimé), ce film 34 est lié intimement (en particulier scellé) au tissu 38 (zone repérée 40 localement sur la figure 4).

Un scellement à chaud du film 34 dans les interstices du tissu 38 permet d'obtenir ce résultat, en particulier.

Là encore, la cavité 340 constituée par la déformation en creux du film 34 peut éventuellement être sensiblement dépourvue d'air, du moins si le tissu 38 est étanche à l'air (éventuellement recouvert d'une telle pellicule étanche, dans ce but).

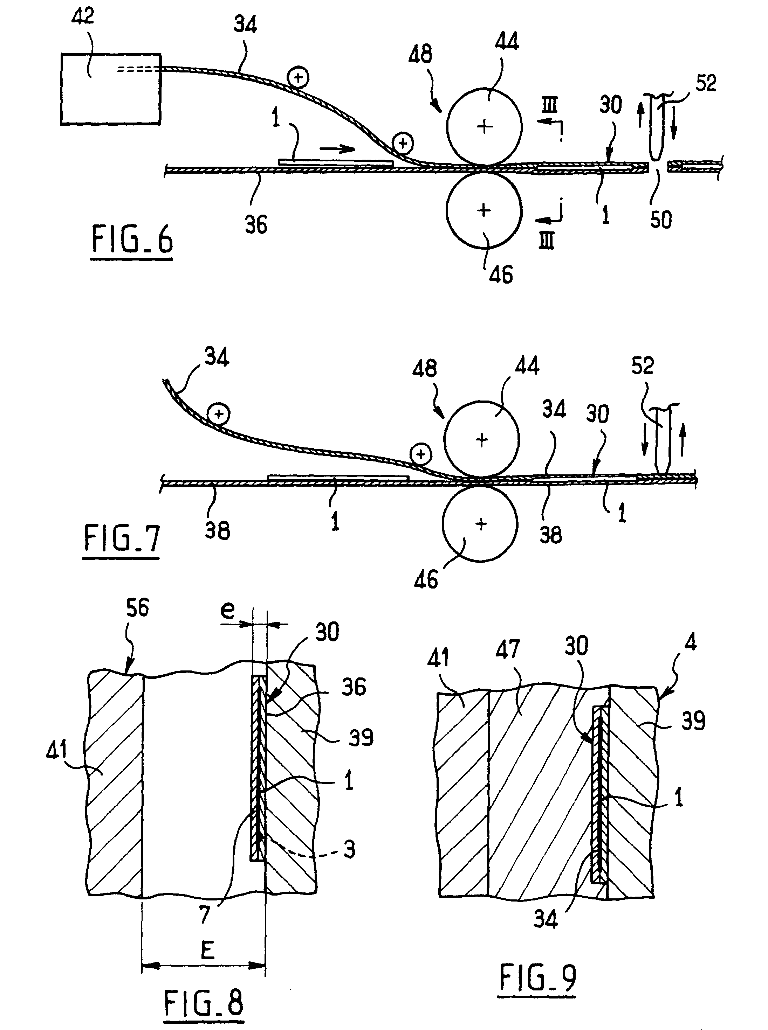

Sur la figure 5, l'alternative de conditionnement représentée correspond, en fait, à la solution de la figure 4, sans la feuille de tissu 38 (et avec, si nécessaire, mise en place de la puce et de l'antenne contre ce film).

Ainsi, l'étiquette 1 est-elle à nouveau étroitement emprisonnée dans la cavité en creux 340 que forme le film thermoplastique 34.

Sur la figure 6, on voit donc représentée schématiquement une méthode d'obtention privilégiée de l'étiquette de la figure 3, étant précisé que celle de la figure 5 peut s'obtenir de la même manière, après suppression de l'un des deux films thermoplastiques.

En 42, est tout d'abord schématiquement représentée l'unité d'extrusion du film 34 (l'extrusion des deux films est aussi envisageable).

Les opérations qui suivent vont se dérouler juste en sortie de l'extrudeuse 42.

Sur le film 36 (qui peut être "froid", c'est-à-dire sensiblement à la température ambiante) est d'abord placée l'étiquette 1.

L'étiquette peut en particulier être collée sur le film, de manière qu'autour d'elle soit réservée une bande de film permettant le scellement du second film.

Le second film (en l'espèce le film 34) est ensuite amené en regard du premier film et des étiquettes réparties sur la chaîne, en ligne.

Typiquement, la température du film 34 est alors supérieure à sa température de transition vitreuse, voire proche de sa température de fusion (sans toutefois qu'il y ait dégradation de la matière), de telle sorte que le film chaud est alors malléable dans son état "caoutchoutique", donc plus aisément déformable (comprimable), évitant ainsi que la création que l'on veut obtenir de la(des) zone(s) en creux pour le logement des étiquettes induise un effort ou une pression trop importante sur ces étiquettes, et en particulier les puces, risquant de les endommager.

Pour des films en polyéthylène, on peut prévoir une température de l'ordre de 180°C à 250°C (supérieure donc à la température de transition vitreuse : 170°C, environ).

Ainsi prise en sandwich, l'étiquette 1 passe avec les deux films, entre les rouleaux 44, 46 se faisant immédiatement face dans l'unité de calandrage 48 qui, sans endommager l'étiquette, déforme ici le film "chaud" 34 en le comprimant comme indiqué sur la figure 3, de manière à créer, comme on peut le voir à droite sur la figure 6, la zone d'emballage 30, avec les deux films intiment liés l'un à l'autre en périmétrie. Bien entendu, des moyens de (ré)chauffage (non représentés) peuvent être prévus à l'endroit, ou en amont, de l'unité 48 pour assurer un (ré)chauffage du film 34 jusqu'à cet état "caoutchoutique", si nécessaire.

Il ne reste plus alors qu'à découper la bande entre deux étiquettes successives, comme à l'endroit de la zone 50 sur la figure 6, par exemple au moyen du couteau mobile 52.

On obtient alors, par exemple, l'étiquette conditionnée et entièrement encapsulée de la figure 2.

Ainsi insérées entre les deux films thermoplastiques 34, 36, l'étiquette et la puce sont protégées sur toute leur surface et suffisamment retenues pour empêcher un quelconque déplacement, notamment si cette étiquette conditionnée doit être surmoulée sur une autre pièce plastique, évitant ainsi en particulier les problèmes typiques de pression et de température qui surviennent lors d'un tel moulage.

Plutôt que de calandrer des films, on peut les thermocoller, toujours en périmétrie de l'étiquette, et toujours avec au moins un film suffisamment chaud pour être aisément déformable, en particulier étirable pour le thermocollage.

Si un vide d'air est souhaité dans une telle opération de thermocollage, il ne pose pas de problème de réalisation.

Par contre, si l'on conditionne la puce contre un seul film comme sur la figure 5, il y aura lieu alors de s'assurer que l'opération de conditionnement (tel en particulier que le calandrage) ne détériore pas la fonctionnalité de l'étiquette. On s'assurera également que cette étiquette ne ressort pas "du gabarit" du film, c'est-à-dire que l'étiquette vient sensiblement de niveau avec la zone environnante du film, comme le montrent les traits mixtes sur la figure 5.

Sur la figure 7, on a schématisé l'obtention de l'étiquette conditionnée de la figure 4, par calandrage.

Sur cette figure 7, on a une nouvelle fois repéré en 34 le film thermoplastique supérieur qui est amené chaud, à température supérieure à sa température de transition vitreuse par-dessus chacune des étiquettes 1 à conditionner.

Avant l'amenée du film thermoplastique 34, chaque étiquette 1 a été placée sur une feuille en tissu 38 de quelques dixièmes de millimètre à un millimètre environ d'épaisseur.

Cet ensemble (1, 34, 38) passe entre les rouleaux de calandrage 44, 46, de l'unité 48 déjà présentée.

Le film chaud 34 est alors, comme précédemment, déformé (comprimé) pour épouser le contour de l'étiquette 1, de telle sorte que le tissu 38 n'a pas été particulièrement déformé. En recourant, plus loin sur la chaîne, à nouveau à un outil de découpe tel que 52, on individualise les étiquettes de la bande formée et l'on parvient ainsi à l'étiquette conditionnée de la figure 4.

Comme précédemment, un thermocollage, plutôt qu'un calandrage, peut être utilisé et l'on peut également ici choisir de sécuriser la position de l'étiquette sur la feuille de tissu (avant l'opération d'enrobage étroit par le film thermoplastique) en retenant l'étiquette sur cette feuille, par exemple au moyen d'une colle ou tout moyen équivalent approprié.

Si nécessaire, l'une des étiquettes conditionnées qui vient d'être présentée va maintenant pouvoir être intégrée dans la paroi d'une pièce plastique.

La fabrication de cette pièce consistant en un moulage, typiquement par injection de matière plastique dans un moule, la pochette, de conditionnement 30 est disposée entre les deux parois 39, 41 du moule d'injection 56 (figure 8).

En particulier, l'une des faces 36, de la pochette de conditionnement est placée contre la paroi 39 du moule, l'écartement E entre les deux parois 39, 41, étant (pendant tout le moulage) supérieur à l'épaisseur totale e de l'étiquette conditionnée.

Si les deux parois opposées de la pochette de conditionnement sont constituées dans la même matière plastique et présentent les mêmes caractéristiques de résistance mécanique, chimique et thermique, le choix de la paroi de l'étiquette à placer contre la paroi 39 du moule est indifférent, encore que l'on choisira alors de préférence la paroi face à laquelle est située la puce 3, de manière que, lors de l'injection de la matière plastique dans le moule, cette puce et l'antenne soient protégées par deux écrans constitués par la paroi du conditionnement et par le substrat 7.

Ce choix sera d'autant plus confirmé si l'une des parois de la pochette est multicouche, mais inverse si l'on utilise une paroi en tissu (feuille 38).

A noter que l'utilisation d'un tissu peut permettre de s'affranchir partiellement ou totalement de la contrainte du choix du matériau support de l'étiquette en fonction de la nature du matériau constitutif 47. En effet dans ce cas, l'étiquette étant conditionnée sur du tissu, il est possible de mouler (injecter, extruder, rotomouler, ...) n'importe quel matériau, la "matrice" du tissu assurant la bonne cohésion entre l'ensemble 30 et le matériau constitutif 47 grâce à la pénétration de ce dernier au sein de ladite matrice. Le tissu a alors une fonction de solidarisation.

L'autre paroi (thermoplastique) sera de préférence choisie pour être fusionnable avec la matière plastique 47 de la pièce que l'on voit sur la figure 9, après que l'on ait donc apporté cette matière entre les parois 39 et 41 du moule.

Pour favoriser l'intégration du conditionnement 30 avec la paroi de la pièce (telle qu'une caisse), la solution privilégiée consiste donc à obtenir une fusion entre la matière 47 et celle de la paroi thermoplastique considérée.

Pour obtenir un tel soudage, on pourra utiliser du polypropylène pour les matières 34 et 47, ou encore du polyéthylène haute densité.

Les conditions de température et de pression d'injection de la matière 47 pourront être respectivement d'environ 250°C à 300°C (sortie de buse) et de 500 bars à 1 000 bars (au lieu d'implantation).

En ce qui concerne le maintien (temporaire, limité à la durée de la fabrication de la pièce plastique) de la pochette de conditionnement contre la paroi en regard 39 du moule, celui-ci pourra s'effectuer par tout moyen approprié connu, tel que aspiration, retenue par une force électrostatique, ou encore adhésion.

Pour ce qui concerne l'adhésion, un adhésif tel que décrit en page 9 ligne 33 et suivantes de WO-A-98 42488 pourra être retenu.

Les solutions proposées dans WO-A-93 24381 en référence aux figures 9a à 9d pourraient également convenir.

On notera encore que l'absence d'air à l'intérieur de la pochette évite les problèmes de dégazage lors de l'injection de la matière 47.

## Revendications

1. Procédé pour conditionner une étiquette électronique (1) comprenant une puce électronique (3), **caractérisé en ce que** :
- on place l'étiquette (1) entre deux feuilles (34, 36, 38) dont l'une au moins est en matière thermoplastique et chaude,
- et on exerce une force sur au moins la feuille chaude en matière thermoplastique (34, 36), pour la déformer, en y créant ainsi un logement en creux pour l'étiquette, laquelle est ainsi étroitement emprisonnée entre lesdites feuilles.

2. Procédé selon la revendication 1, **caractérisé en ce que** :
- on utilise comme feuilles, un premier et un second films en matière thermoplastique (34, 36),
- et, lors de l'étape de placement de l'étiquette entre ces feuilles, on place d'abord l'étiquette contre le premier film (36), puis on amène le second film (34) contre le premier en emprisonnant l'étiquette entre les deux films, l'un au moins d'entre eux étant alors à une température supérieure à sa température de transition vitreuse.

3. Procédé selon la revendication 2, **caractérisé en ce qu'**on exerce ladite force sur les films en les calandrant à chaud, juste après les avoir extrudés, ce qui les lie intimement ensemble autour de l'étiquette tout en créant le logement en creux (340), par compression.

4. Procédé selon la revendication 1, **caractérisé en ce que** :
- on utilise comme feuilles, un film en matière thermoplastique (34) et une feuille en tissu (38),
- et, lors de l'étape de placement de l'étiquette entre cette feuille et ce film :
. le film est alors à une température supérieure à sa température de transition vitreuse,
. on interpose l'étiquette entre la feuille de tissu et le film alors à cette température,
. on force le film (34) à se déformer jusqu'à y créer ledit logement en creux pour l'étiquette,
. et on lie ensemble la feuille de tissu et le film, autour de l'étiquette (1).

5. Procédé selon l'une quelconque des revendications 1, 2, 4, **caractérisé en ce qu'**on déforme la(les) feuille(s) en exerçant sur elle(s) une force et en la(les) thermocollant ensemble.

6. Procédé selon l'une quelconque des revendications 1 à 5, **caractérisé en ce que** la(les) feuille(s) en matière thermoplastique est(sont) en polyoléfine, et pendant que la force est exercée, elle(s) est(sont) à une température comprise entre + 80°C et - 80°C environ, par rapport à sa(leur) température de transition vitreuse, et de préférence, entre + 30°C et - 30°C.

7. Pièce en matière plastique intégrant une étiquette électronique obtenue par la mise en oeuvre du procédé selon l'une quelconque des revendications 1 à 6, les matières plastique et thermoplastique de la pièce (47) et de l'étiquette (1), respectivement, étant fusionnées ensemble.

## Claims

1. Method for packaging an electronic tag (1) comprising an electronic chip (3), **characterised in that**:
- the tag (1) is positioned between two sheets (34, 36, 38), at least one of which is a hot thermoplastic,
- and a force is exerted on at least the hot thermoplastic sheet (34, 36), so as to deform it, thereby creating therein a hollow receptacle for the tag, which accordingly is firmly trapped between said sheets.

2. Method according to claim 1, **characterised in that**:
- the sheets employed are a first and a second thermoplastic film (34, 36),
- and, as the tag is being positioned between said films, the tag is first of all positioned against the first film (36), whereupon the second film (34) is set against the first so as to trap the tag between the two films, at least one of the latter then being at a higher temperature than its glass transition temperature.

3. Method according to claim 2, **characterised in that** said force is exerted on the films by hot calendering them just after having extruded them, which action joins them intimately together around the tag and at the same time creates the hollow receptacle (340) by compression.

4. Method according to claim 1, **characterised in that**:
- the sheets employed are a thermoplastic film (34) and a textile sheet (38),
- and, as the tag is being positioned between said sheet and said film:
. the film is then at a higher temperature than its glass transition temperature,
. the tag is inserted between the textile sheet and the film then at said temperature,
. the film (34) is forcibly deformed until said hollow receptacle for the tag is created in said film,
. and the textile sheet and the film are joined together around the tag (1).

5. Method according to any of claims 1, 2 and 4, **characterised in that** the sheet or sheets are deformed by exerting a force on it/them and thermally bonding it/them together.

6. Method according to any of claims 1 to 5, **characterised in that** the thermoplastic sheet or sheets are made of polyolefin, and whilst the force is being exerted it is/they are at a temperature of between approximately +80°C and -80°C, preferably between +30°C and -30°C, with respect to its/their glass transition temperature.

7. Piece of plastic incorporating an electronic tag obtained by carrying out the method according to any of claims 1 to 6, the respective plastic and thermoplastic materials of the piece (47) and of the tag (1) being amalgamated together.

## Patentansprüche

1. Verfahren zum Konditionieren eines elektronischen Etiketts (1), das einen elektronischen Chip (3) aufweist, **dadurch gekennzeichnet, daß**:
- man das Etikett (1) zwischen zwei Folien (34, 36, 38) anordnet, von denen mindestens eine aus thermoplastischem und warmem Material besteht,
- und man auf mindestens die warme Folie aus thermoplastischem Material (34, 36) eine Kraft ausübt, um sie zu verformen, wobei dadurch dort so ein vertiefter Sitz für das Etikett geschaffen wird, welches also eng zwischen den Folien eingeschlossen wird.

2. Verfahren nach Anspruch 1, **dadurch gekennzeichnet, daß**:
- man als Folien einen ersten und einen zweiten Film aus thermoplastischem Material (34, 36) verwendet,
- und man während des Anordnungsschrittes des Etikettes zwischen diesen Folien zuerst das Etikett gegen den ersten Film (36) anordnet und dann den zweiten Film (34) gegen den ersten bringt, wobei das Etikett zwischen den zwei Filmen eingeschlossen wird, und mindestens einer von ihnen sich dann auf einer Temperatur befindet, die höher als seine glasartige Übergangstemperatur ist.

3. Verfahren nach Anspruch 2, **dadurch gekennzeichnet, daß** man die Kraft auf die Filme gleich nachdem sie extrudiert wurden, ausübt, indem sie heißkalandriert werden, was sie innig miteinander um das Etikett herum verbindet, wobei zugleich durch Kompression der vertiefte Sitz (340) geschaffen wird.

4. Verfahren nach Anspruch 1, **dadurch gekennzeichnet, daß**:
- man als Folien einen Film aus thermoplastischem Material (34) und eine Folie aus Gewebe (38) verwendet,
- und während des Schrittes der Anordnung des Etikettes zwischen dieser Folie und diesem Film:
. der Film sich dann auf einer Temperatur befindet, die höher als seine glasartige Übergangstemperatur ist,
. man das Etikett zwischen die Folie aus Gewebe und den sich dann auf dieser Temperatur befindlichen Film anordnet,
. man den Film (34) zwingt, sich zu verformen bis hier der vertiefte Sitz für das Etikett geschaffen ist,
und man die Folie aus Gewebe und den Film um das Etikett (1) herum zusammen verbindet.

5. Verfahren nach einem der Ansprüche 1, 2, 4, **dadurch gekennzeichnet, daß** man die Folie(n) verformt, indem man auf sie eine Kraft ausübt und sie schmelzfixiert.

6. Verfahren nach einem der Ansprüche 1 bis 5, **dadurch gekennzeichnet, daß** die Folie(n) aus thermoplastischem Material aus Polyolefin besteht (bestehen) und sie sich,während die Kraft ausgeübt wird, auf einer Temperatur befindet (befinden), die zwischen etwa +80°C und -80°C bezüglich ihrer glasartigen Übergangstemperatur befindet (befinden) und vorzugsweise zwischen +30°C und -30°C.

7. Stück aus Kunststoffmaterial, welches ein elektronisches Etikett einbezieht, das durch die Durchführung des Verfahrens nach einem der Ansprüche 1 bis 6 erhalten wird, wobei die plastischen und thermoplastischen Materialien des Stückes (47) bzw. des Etikettes (1) zusammen verschmolzen werden.
